# EUROPÄISCHE PATENTSCHRIFT

(11) **EP 0 741 959 B1**
(45) Veröffentlichungstag und Bekanntmachung des Hinweises auf die Patenterteilung: **08.12.2004**
(21) Anmeldenummer: 96105922.7
(22) Anmeldetag: 16.04.1996
(51) Int. Cl.: A01B 29/04, A01C 7/06, A01C 5/06

(54) **Bodenwalze mit einem Tragrohr**
Ground roller with carrying tube
Rouleau pour le sol avec tube de support

(30) Priorität: 11.05.1995 DE 19517184
(43) Veröffentlichungstag der Anmeldung: 13.11.1996
(73) Patentinhaber: Amazonen-Werke H. Dreyer GmbH & Co. KG, 49205 Hasbergen (DE)
(72) Erfinder: Dreyer, Heinz, Dr., Dipl.-Ing., 49205 Hasbergen (DE); Scheufler, Bernd, Dr., Ing., 49205 Hasbergen (DE); Gattermann, Bernd, Dipl.-Ing., 27798 Hude (DE); Reinke, Wilfried, 26125 Oldenburg (DE)

(56) Entgegenhaltungen:
- EP-A- 0 047 981
- EP-A- 0 134 740
- EP-A- 0 281 802
- EP-A- 0 358 947
- EP-A- 0 583 850
- DE-C- 232 289
- DE-U- 9 318 118
- GB-A- 1 187 179
- GB-A- 2 019 701
- GB-A- 2 124 063
- US-A- 1 882 603
- US-A- 4 686 914

## Beschreibung

Die Erfindung betrifft eine Bodenwalze mit einem Tragrohr gemäß des Oberbegriffes des Patentanspruches 1.

Eine derartige Bodenwalze in der DE 39 02 757 A1 beschrieben. Bei dieser Bodenwalze sind auf einem Tragrohr Verdichtungsringe beabstandet angeordnet, welche in den Boden Rillen drücken, in welche das Saatgut abgelegt werden kann. Auf trockenen Böden arbeitet diese Bodenwalze ausreichend. Während sie jedoch auf feuchten und klebrigen Böden verstopft.

Der Erfindung liegt die Aufgabe zugrunde, diese Nachteile zu beseitigen.

Diese Aufgabe wird erfindungsgemäß durch die kennzeichnenden Maßnahmen des Anspruches 1 gelöst. Durch die Abstreifer wird die gattungsgemäße Bodenwalze auch unter schwierigsten Bedingungen ausreichend sauber gehalten. Es hat sich bei Versuchen gezeigt, daß eine gute Verdichtungsarbeit geleistet wird, wenn die Verdichtungsringe einen keilförmigen Querschnitt aufweisen. Der Boden von den Keilringen dort verdichtet, an welcher Stelle das Saatgut abgelegt wird. Somit erhält das Saatgut optimale Keim- und Auflaufbedingungen. Dadurch, daß der Walzendurchmesser und der Außendurchmesser und die Form der Bodenverdichtungsringe derart gewählt sind, daß der Boden von den Bodenverdichtungsringen und nicht von den Walzenrohr verdichtet wird, wird erreicht, daß der Boden nur streifenweise verdichtet, so daß das Wasser in vorteilhafter Weise durch die weniger oder nicht verdichteten Streifen zwischen den von den keilförmigen Ringen verdichteten Streifen leicht im Boden versickern kann. Das Tragrohr hat dann nur Notlaufeigenschaften, damit die Walze auf leichten Böden nicht einbricht.

Die GB 21 24 063 zeigt eine als sog. Zahnpackerwalze ausgebildete Bodenwalze. Auf einem zentralen Tragrohr sind beabstandet zueinander Zahnsegmente angeordnet. Diese Zahnsegmente drücken abschnittsweise den Boden fest. Während der Bodenbearbeitung liegt das Tragrohr auf der Bodenoberfläche auf und verdichtet ebenfalls den Boden. Hinter der Bodenwalze sind Abstreifer angeordnet, mittels welcher das Walzentragrohr zwischen den Zahnelementen gereinigt werden kann.

Die EP 01 34 740 zeigt eine aus einzelnen Zahnsegmenten zusammengesetzte Zahnpackerwalze. Diese einzelnen zahnartigen Elemente sind auf ein zentrales Rohr aufgeschoben. In dem Bereich zwischen den zahnartigen Ansätzen einzelner Elemente befindet sich ein geschlossener Zylindermantel. Dieser jeweilige Zylindermantel wird in dem Bereich zwischen den zahnartigen Ansätzen durch von hinten in die Zwischenräume eingreifende Abstreifer gereinigt.

In einer bevorzugten Ausführungsform ist vorgesehen, daß hinter der Bodenwalze Saatleitungselemente angeordnet sind, daß das Saatgut wahlweise durch Saatleitungsrohre oder durch an die Saatleitungsrohre anschließbare Säschare im Boden ablegbar ist. Infolge dieser Maßname kann je nach den Einsatzbedingungen in optimalster Weise das Saatgut im Boden abgelegt werden.

In einer Ausführungsform ist vorgesehen, daß die Bodenverdichtungsringe der Bodenwalze jeweils aus zwei geprägten Halbschalenringen bestehen. In einer anderen Ausführungsform ist vorgesehen, daß die Bodenverdichtungsringe aus Gußringen bestehen, die auf einem Walzenrohr aufgeschoben sind. Dieses erlaubt eine besonders einfache Montage der Bodenwalze.

Weitere Einzelheiten der Erfindung sind den übrigen Unteransprüchen, der Beispielsbeschreibung und den Zeichnungen zu entnehmen. Hierbei zeigen
- Fig. 1: die Bodenwalze mit den hinter der Bodenwalze angeordneten Säelementen in Seitenansicht und Prinzipdarstellung,
- Fig. 2: die Bodenwalze in Vorderansicht und verkleinertem Maßstab,
- Fig.3: eine Halbschale des Keilringes der Bodenwalze gemäß Fig. 2 in Vorderansicht und vergrößertem Maßstab,
- Fig. 4: die Halbschale des Keilringes gemäß Fig. 3 in Seitenansicht,
- Fig. 5: ein weiterer Keilring im Schnitt und einem anderen Maßstab und
- Fig. 6: der Keilring gemäß Fig. 5 in Seitenansicht.

Die Bodenwalze 1 ist Bestandteil einer Bestellkombination. Die Bodenwalze 1 ist in dem Rahmen 2 mittels der Lager 3 frei drehbar gelagert. Auf der Vorderseite der Bodenwalze 1 ist an dem Rahmen 2 in Höhenrichtung bewegbar das Planierschild 4 angeordnet. Über nicht dargestellte Verbindungselemente kann die Bodenwalze 1 hinter einem nicht dargestellten Bodenbearbeitungsgerät, beispielsweise einer Kreiselegge etc. angeordnet und so Bestandteil einer Bestellkombination sein. Auf dem Rahmen 2 der Bodenwalze 1 ist in bekannter, daher nicht näher dargestellter Weise, der Vorratsbehälter einer Sämaschine mit Dosierorganen angeordnet. Hinter der Bodenwalze 1 sind in Abständen zueinander die Säelemente 5 angeordnet, die über Schläuche 6 mit dem Dosier- bzw. Verteilorgan der Sämaschine in bekannter und daher nicht näher dargestellter Weise verbunden sind.

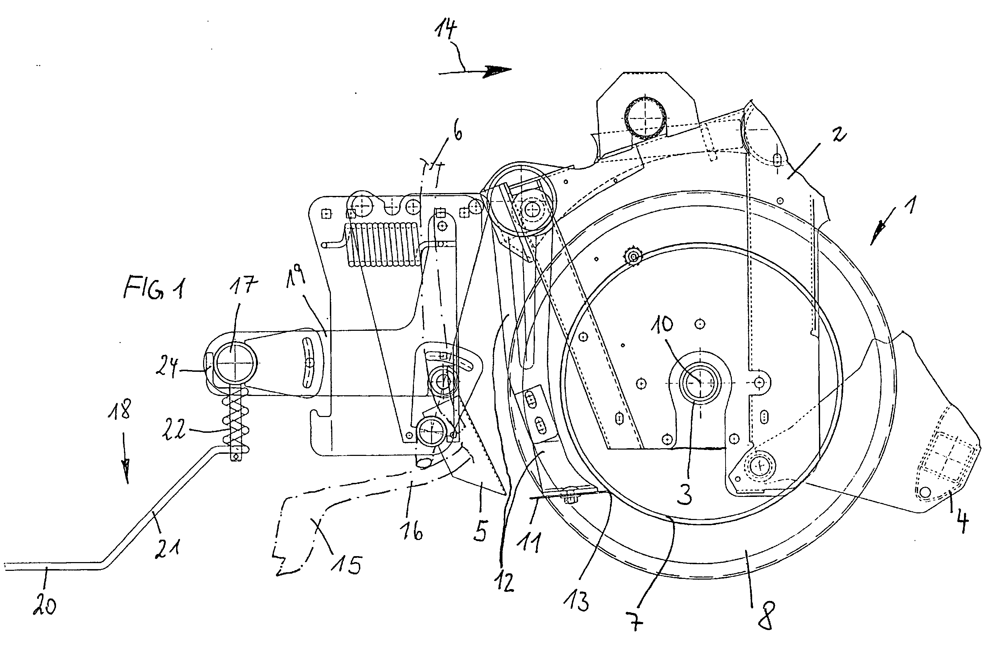

Die Bodenwalze 1 weist das zentrale Tragrohr 7 auf, auf dem beabstandet zueinander die Verdichtungsringe 8 angeordnet sind. Die Verdichtungsringe 8 bestehen gemäß dem Ausführungsbeispiel nach den Fig. 1-4 aus jeweils zueinander spiegelbildlich angeordnet und zusammen gesetzten Halbschalen 9, die beispielsweise durch eine Schweißverbindung miteinander verbunden sind. Die Verdichtungsringe 8 weisen in ihrem äußeren Bereich einen keilförmigen Querschnitt auf, so daß sie jeweils eine keilförmige Rille in den Boden drücken. Die Verdichtungsringe 8 können zusätzlich in ihrem äußeren keilförmigen Bereich gezahnt oder gezackt etc. ausgebildet sein. Auf der Rückseite der Bodenwalze 1 sind unterhalb der Drehachse 10 der Bodenwalze 1 Abstreifer 11 an langen, quer zur Fahrtrichtung schmale Halterungen 12 angeordnet. Die Abstreifer 11 greifen zwischen die Verdichtungsringe 8 und liegen mit ihrer Abstreifkante 13 zumindest annähernd am Tragrohr 7 an. Mittels dieser Abstreifer 11 wird das an dem Verdichtungsringen 8 und dem Walzenrohr 7 anhaftende Bodenmaterial abgestreift und auf der Bodenoberfläche abgelegt.

Der Durchmesser des Tragrohres 7 und der Außendurchmesser und die Form der Verdichtungsringe 8 sind derart gewählt, daß der Boden im wesentlichen nur von den Verdichtungsringen 8 und nicht von dem Tragrohr 7 verdichtet wird. Das Tragrohr 7 stellt die Notlaufeigenschaften der Bodenwalze 1 sicher, damit sie auf leichten und sehr lockeren Böden nicht zu tief einsinkt. Der Boden wird von den Ringen 8 nur streifenweise verdichtet, so daß das Wasser in den lockeren Streifen zwischen den Rillen versickern kann. Da das Tragrohr 7 nur unwesentlichen Bodenkontakt und keine tragende Funktion hat, läßt es sich leicht reinigen.

Das Tragrohr 7 weist einen Durchmesser von 390 bis 420 mm, vorzugsweise etwa 405 mm auf. Der Außendurchmesser der Ringe 8 beträgt 550 bis 600 mm, vorzugsweise 560 bis 580 mm. Die Breite der Ringe 8 beträgt im Bereich des Tragrohres 7 etwa 60 bis 100 mm, vorzugsweise etwa 80 mm. Die Höhe der Ringe 8 vom Tragrohr 7 bis zur Keilspitze beträgt etwa 60 bis 100 mm.

Hinter der Bodenwalze 1 sind Säelemente 5 angeordnet. In dem in Fig. 1 dargestellten Ausführungsbeispiel sind die Säelemente 5 in Fahrtrichtung 14 gesehen fluchtend zu den Bodenverdichtungsringen 8 angeordnet, so daß über die Säelemente 5 das von den Saatleitungen 6 den Säelementen 5 zugeführte Saatgut in den keilförmigen Rillen, die von den Verdichtungsringen 8 in den Boden gedrückt sind, abgelegt wird. Die Säelemente 5, die keine Bodenkontakt haben, können gegen mit strickpunktierten Linien dargestellten Säscharen 15 ausgetauscht werden, so daß das Saatgut in diesem Falle mit den Säscharen 15 in die Rillen, die die Ringe 8 hinterlassen haben, abgelegt wird. Den Säscharen 15 wird über den Scharhaltearmen 16, an dessen Ende die Saatleitungen 6 angeschlossen sind, das Saatgut zugeführt.

Hinter den Säelementen 5 ist an einem quer zur Fahrtrichtung 14 verlaufenden Querträger 17 der Saatstriegel 18 angeordnet. Der Querträger 17 ist über Halterungen 19 am Rahmen 2 der Bodenwalze 1 befestigt.

Der Saatstriegel 18 weist beabstandet zueinander, schräg zur Fahrtrichtung 14 angestellte Zustreichelemente 20 auf, die ein aufrechtes Befestigungsteil 21 besitzen. Das Befestigungsteil 21 ist als Federwindung ausgebildet. An dem Querträger 17 sind beabstandet zueinander die aufrechtstehenden Befestigungsbolzen 22 angeordnet. An diesen Befestigungsbolzen 22 sind die Zustreichelemente 20 mittels des aufrechten Befestigungsteiles 21 angeordnet. Das Befestigungsteil 21 ist als Federwindung ausgebildet und von unten auf einen der aufrecht stehenden Bolzen 22 aufgesteckt und mittels eines Sicherungselementes auf dem Bolzen 22 gesichert. An die Federwindung 21 schließt sich ein aufrechtes Anschlagelement 24 an, welches mit dem Querträger 17 zusammen wirkt. Dieses Anschlagelement 24 ist derart angeordnet, daß es die Zustreichposition des Zustreichelementes 19 bei Vorwärtsfahrt der Maschine in Fahrtrichtung 14 bestimmt. Hierbei liegt dann das Anschlagelement 24 am Querträger 17 an. Wenn die Maschine zurückrollt, schwenkt das Zustreichelement 19, so daß das Zustreichelement 19 im begrenzten Umfang zur Seite schwenken kann. Eine Beschädigung des Zustreichelementes 19 wird hierdurch verhindert.

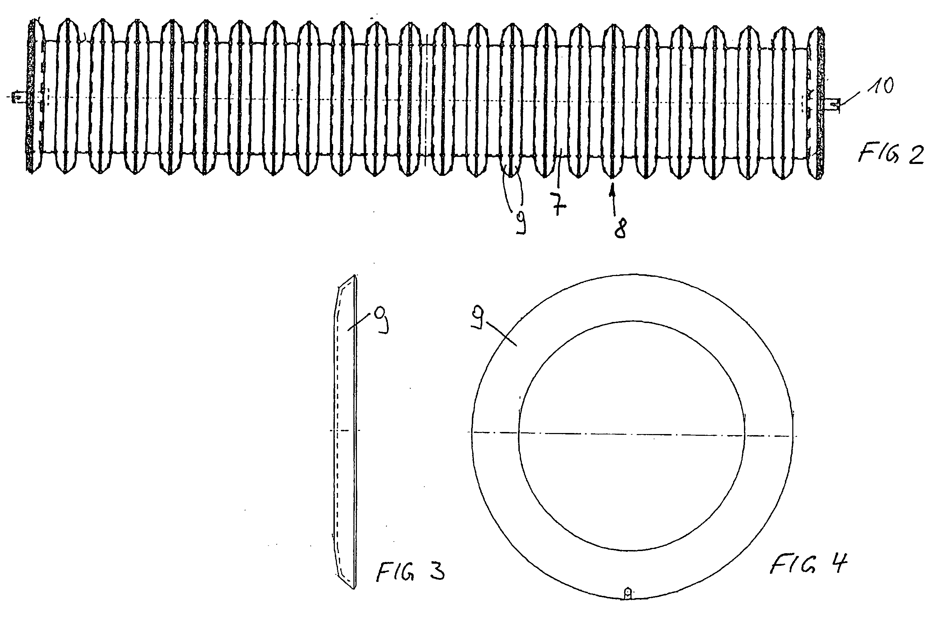

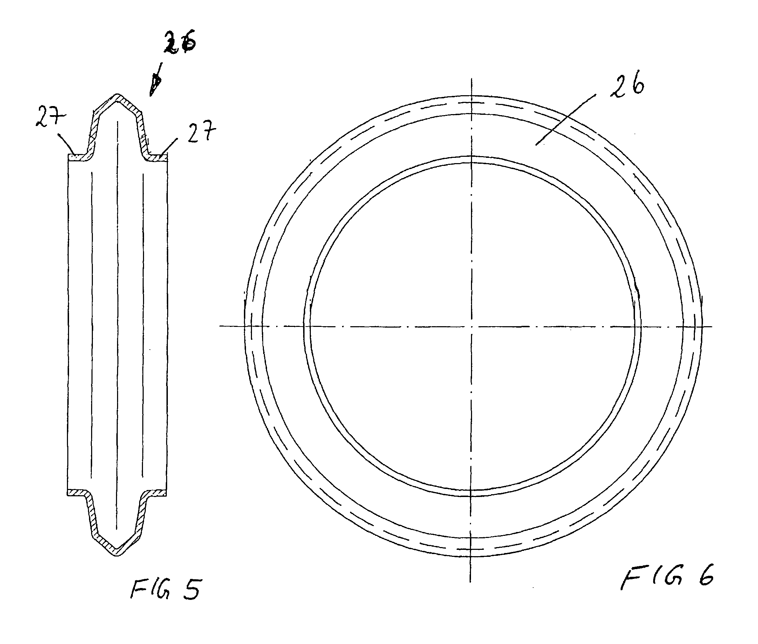

Gemäß dem Ausführungsbeispiel nach den Fig. 5 und 6 bestehen die Verdichtungsringe 26 aus Gußringen, die auf dem zentralen Walzenrohr 7 aufgeschoben werden. Die Gußringe 26 weisen angegossene Abstandselemente 27 auf, die die einzelnen Verdichtungsringe 26 auf Abstand halten. Die auf das Walzenrohr 7 aufgeschobene Verdichtungsringen 26 werden im Außenbereich des zentralen Tragrohres 7 durch geeignete Befestigungsmittel axial festgelegt.

In einer anderen Ausführungsform ist vorgesehen, daß die Säschare 15, die in Fig. 1 mit strichpunktierten Linien dargestellt sind, quer zur Fahrtrichtung 14 verstellbar angeordnet sind, so daß die Säschare 15 je nach Einsatzverhältnissen sich wahlweise in der von den Bodenverdichtungsringen 8 hinterlassenen Rillen oder auf dem zwischen den Rillen sich befindlichen Damm befinden.

## Patentansprüche

1. Bodenwalze (1) mit einem Tragrohr (7), auf dem Verdichtungsringe (8,26) beabstandet angeordnet sind, **dadurch gekennzeichnet, daß** auf der Rückseite unterhalb der Drehachse (10) der Bodenwalze (1) Abstreifer (11) angeordnet sind, welche zwischen die Verdichtungsringe (8,26) eingreifend angeordnet sind und mit ihrer Abstreifkante (13) zumindest annähernd am Tragrohr (7) anliegen, daß die Verdichtungsringe (8,26) einen keilförmigen Querschnitt aufweisen, daß der Walzendurchmesser und der Außendurchmesser und die Form der Bodenverdichtungsringe (8,26) derart gewählt sind, daß ein nicht leichter oder nicht sehr lockerer Boden von den Bodenverdichtungsringen (8,26) und nicht vom Walzenrohr (7) verdichtet wird.

2. Bodenwalze nach Anspruch 1, **dadurch gekennzeichnet, daß** hinter der Bodenwalze (1) Saatleitungselemente (5,15) angeordnet sind, daß das Saatgut wahlweise durch die Saatleitungsrohre (5) im Boden ablegbar ist oder durch an die Saatleitungsrohre anschließbare Säschare (15) im Boden ablegbar ist.

3. Bodenwalze nach Anspruch 1, **dadurch gekennzeichnet, daß** die Bodenverdichtungsringe (8,26) jeweils aus zwei geprägten Halbschalenringen (9) bestehen.

4. Bodenwalze nach Anspruch 1, **dadurch gekennzeichnet, daß** die Bodenverdichtungsringe aus Gußringen (26) bestehen, die auf ein Walzenrohr (7) aufgeschoben sind.

5. Bodenwalze nach Anspruch 1, **dadurch gekennzeichnet, daß** auf der Rückseite der Walze (1) Abstreifer (11) für die Ringe (8,26) und das Walzenrohr (7) vorgesehen sind.

6. Bodenwalze nach Anspruch 1, **dadurch gekennzeichnet, daß** die Säschare (5,15) je nach Einsatzverhältnissen sich wahlweise in der von den Bodenverdichtungsringen (8,26) hinterlassenen Rillen oder auf dem zwischen den Rillen sich befindlichen Damm befinden.

## Claims

1. Soil-cultivating roller (1) having a supporting tube (7), on which compacting rings (8, 26) are disposed at a spacing, **characterised in that** scrapers (11) are disposed at the rear below the axis of rotation (10) of the soil-cultivating roller (1), which scrapers (11) are disposed so as to engage between the compacting rings (8, 26) and with their scraping edge (13) abut at least approximately against the supporting tube (7), **in that** the compacting rings (8, 26) have a wedge-shaped cross-section, **in that** the roller diameter and the outer diameter and the shape of the soil compacting rings (8, 26) are selected in such a manner that soil, which is not light or not very loose, is compacted by the soil compacting rings (8, 26) and not by the roller supporting tube (7).

2. Soil-cultivating roller according to claim 1, **characterised in that** seed guiding elements (5, 15) are disposed behind the soil-cultvating roller (1), **in that** seed material can be selectively deposited in the soil by the seed guiding tubes (5) or can be deposited in the soil by sowing coulters (15) which are connectable to the seed guiding tubes.

3. Soil-cultivating roller according to claim 1, **characterised in that** the soil compacting rings (8, 26) consist respectively of two shaped half shell rings.

4. Soil-cultivating roller according to claim 1, **characterised in that** the soil compacting rings consist of casting rings (26), which are pushed onto a roller supporting tube (7).

5. Soil-cultivating roller according to claim 1, **characterised in that** scrapers (11) for the rings (8, 26) and the roller supporting tube (7) are provided at the rear of the roller (1).

6. Soil-cultivating roller according to claim 1, **characterised in that** the sowing coulters (5, 15), depending on the conditions of use, are situated in an arbitrary manner in the groove left behind by the soil compacting rings (8, 26) or on the bank situated between the grooves.

## Revendications

1. Rouleau de sol (1) comportant un tube de support (7) portant des anneaux compacteurs (8, 26) écartés les uns des autres,
**caractérisé en ce que**
- sur le côté arrière sous l'axe de rotation (10) du rouleau de sol (1) on a des racloirs (11) venant entre les anneaux compacteurs (6, 26) et s'appliquant par leur arête de raclage (13) au moins sensiblement contre le tube de support (7) ;
- les anneaux compacteurs (8, 26) ont une section en forme de coin ;
- le diamètre du cylindre,
- le diamètre extérieur et la forme des anneaux compacteurs de sol (8, 26) sont choisis pour qu'un sol qui n'est ni léger ni très meuble soit compacté par les anneaux compacteurs de sol (8, 26) mais non par le tube (7) du rouleau.

2. Rouleau de sol selon la revendication 1,
**caractérisé en ce que**
derrière un rouleau de sol (1) des éléments de guidage de semence (5, 15) peuvent déposer la semence dans le sol au choix par des tubes de guidage de semence (5) ou par des socs de semoirs (15) qui se raccordent aux tubes de guidage de semence.

3. Rouleau de sol selon la revendication 1,
**caractérisé en ce que**
les anneaux compacteurs de sol (8, 26) sont formés chacun de deux demi-coquilles embouties (9).

4. Rouleau de sol selon la revendication 1,
**caractérisé en ce que**
les anneaux compacteurs de sol sont des anneaux en fonte (26) glissés sur un tube de support.

5. Rouleau de sol selon la revendication 1,
**caractérisé en ce que**
les racloirs (11) pour les anneaux (8, 26) et le tube de support (7) sont sur le côté arrière du rouleau (1).

6. Rouleau de sol selon la revendication 1,
**caractérisé en ce que**
les socs de semoir (5, 15) sont prévus suivant les conditions d'utilisation, au choix dans les rainures laissées par les anneaux compacteurs de sol (6, 26) ou sur le massif en relief entre les rainures.
